# EUROPEAN PATENT SPECIFICATION

(11) **EP 3 221 080 B1**
(45) Date of publication and mention of the grant of the patent: **27.05.2020**
(21) Application number: 15790328.7
(22) Date of filing: 10.10.2015
(51) Int. Cl.: B23K 9/10, H04B 3/54

(54) **SYSTEMS AND METHODS FOR CURRENT MODE COMMUNICATION VIA A WELD CABLE**
SYSTEME UND VERFAHREN FÜR STROMBETRIEBENE KOMMUNIKATION ÜBER EIN SCHWEISSKABEL
SYSTÈMES ET PROCÉDÉS DE COMMUNICATION EN MODE COURANT PAR L'INTERMÉDIAIRE D'UN CÂBLE DE SOUDAGE

(30) Priority: 19.11.2014 US 201414547494
(43) Date of publication of application: 27.09.2017
(73) Proprietor: Illinois Tool Works Inc., Glenview, IL 60025 (US)
(72) Inventor: DENIS, Marc Lee, Glenview, Illinois 60025 (US)
(74) Representative: Trinks, Ole
(86) International application number: PCT/US2015/055039
(87) International publication number: WO 2016/081093

(56) References cited:
- JP-A- S59 193 768
- US-A1- 2007 080 154
- US-A1- 2014 001 169
- US-B1- 7 245 201

## Description

### BACKGROUND

The present disclosure relates generally to welding systems. More specifically, the present disclosure is related to using transceiver circuits to communicate between welding components of a welding system via a weld cable.

A system for communicating between at least two welding components as defined in the preamble of claim 1 is known from US 2014/001169 A1.

Welding is a process that has become increasingly prevalent in various industries and applications. Such processes may be automated in certain contexts, although a large number of applications continue to exist for manual welding applications. In both cases, such welding applications rely on a variety of types of equipment to ensure that the supply of welding consumables (e.g., wire, shielding gas) is provided to the weld in an appropriate amount at the desired time. For example, a metal inert gas (MIG) welding system typically relies on a wire feeder to enable a welding wire to reach a welding torch. The wire is continuously fed during welding to provide filler metal. The MIG welding system may also include a welding power source that ensures that arc heating is available to melt the filler metal and the underlying base metal. In certain applications, the welding system may include power cables that supply power from the welding power source to a welding torch performing a welding application. For example, the welding power source may provide a welding voltage that may be utilized between the welding torch and a workpiece to perform the welding application.

To further enhance the operability of traditional welding systems, certain components of the welding systems, such as the power source and the wire feeder, are communicatively coupled to one another across a dedicated control cable that is in addition to a dedicated power or weld cable. In this manner, control signals defining the operational parameters of the power source may be transmitted or fed back from the wire feeder to the power source.

Although the control cable provides a useful manner in which to communicate between components of the welding system, the control cable is typically fragile relative to the welding cables designed to carry high currents at high voltages. Moreover, since welding machines are commonly used at construction sites or shipyards, where it is not uncommon for the welding machines to be periodically relocated or surrounded by other mobile heavy equipment operating in the same area, the control cable may easily become damaged by the surrounding machines and/or traffic. Damage to the control cable may then cause damage to the wire feeder and/or the welding power source. As a result, the appropriate control signals are not received or transmitted by each respective component.

### BRIEF DESCRIPTION

According to the present invention, a system for communicating between at least two welding components includes a welding cable, a transmitter circuit that sends a first set of data via a welding cable that is configured to couple the at least two welding components. The system also includes a receiver circuit that receives a second set of data via the welding cable and a coupling transformer that couples to the welding cable, the transmitter circuit, and the receiver circuit, such that the first set of data is sent and the second set of data is received via the coupling transformer. The coupling transformer comprises a mechanical clamp having an adjustable diameter configured to wrap around the welding cable, wherein the mechanical clamp includes the secondary windings of the coupling transformer.

The present invention also refers to a welding system as defined in claim 12.

The present invention also refers to a method as defined in claim 14. The method includes receiving, at a transmitter circuit, data from a welding component configured to perform a welding operation, generating, using the transmitter circuit, a current waveform based on the data, and amplifying, using an amplifier of the transmitter circuit, the current waveform. The method also includes transmitting, using a coupling transformer of the transmitter circuit, the amplified current waveform to a weld cable that may couple a data signal to the welding component. The coupling transformer comprises a mechanical clamp having an adjustable diameter configured to wrap around the welding cable, wherein the mechanical clamp includes the secondary windings of the coupling transformer.

### DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example welding system having transceiver circuits that communicate via a weld cable, in accordance with embodiments described herein;
FIG. 2 illustrates a block diagram of the transceiver circuit in the welding system of FIG. 1, in accordance with embodiments described herein;
FIG. 3 illustrates a block diagram of two transceiver circuits of FIG. 2 communicatively coupled to each other via a weld cable, in accordance with embodiments described herein;
FIG. 4 illustrates a flow chart of a method for transmitting data via a weld cable using the transceiver circuit of FIG. 2, in accordance with embodiments described herein;
FIG. 5 illustrates a flow chart of a method for receiving data via a weld cable using the transceiver circuit of FIG. 2, in accordance with embodiments described herein; and
FIG. 6 illustrates an example mechanical clamp having a winding of a coupling transformer of the transceiver circuit of FIG. 2, in accordance with embodiments described herein.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Embodiments of the present disclosure are generally directed towards communicating between components in a welding system via a welding cable. More specifically, embodiments described herein are related to employing transceiver circuits to send and receive current signals (e.g., waveforms) via the weld cable of the welding system. In one embodiment, each transceiver circuit may include a transmitter circuit and a receiver circuit. The transmitter circuit of a first transceiver may receive data to be communicated to another component within the welding system. The transmitter circuit may transform the received data into one or more current waveforms and send the current waveforms to a coupling transformer coupled to the weld cable. The coupling transformer may then, in turn, transfer the current waveforms to the weld cable.

After the current waveforms are transferred to the weld cable, the receiver circuit of a second transceiver circuit disposed at a different location along the weld cable may receive the current waveforms via a second coupling transformer coupled to the receiver circuit of the second transceiver circuit. The receiver circuit may then filter or condition the received current waveforms and transform the current waveforms into a data stream (e.g., serial data) or the like. The data stream may then be provided to another component of the welding system to control certain operations of a respective component, the entire welding system, and the like.

It is now recognized that by transmitting data between coupling transformers in a current mode (i.e., transmitting current waveforms), the components of the welding system may communicate more efficiently (i.e., lower bit error rate) in high frequency systems (e.g., 100 kHz or higher) as compared to transmitting data between coupling transformers in a voltage mode. Moreover, to transmit data via the weld cable using voltage waveforms (i.e., in a voltage mode) between coupling transformers, the weld cable should be sufficiently grounded. However, given the environments in which welding systems are typically employed, it may be difficult to reach a suitable ground point. However, by transmitting data between coupling transformers using a current mode, the manner in which the weld cable is grounded may not affect the quality of transmission of data. As a result, the weld cable may be used to facilitate communications at higher frequency ranges, as compared to the frequency ranges used in the voltage mode.

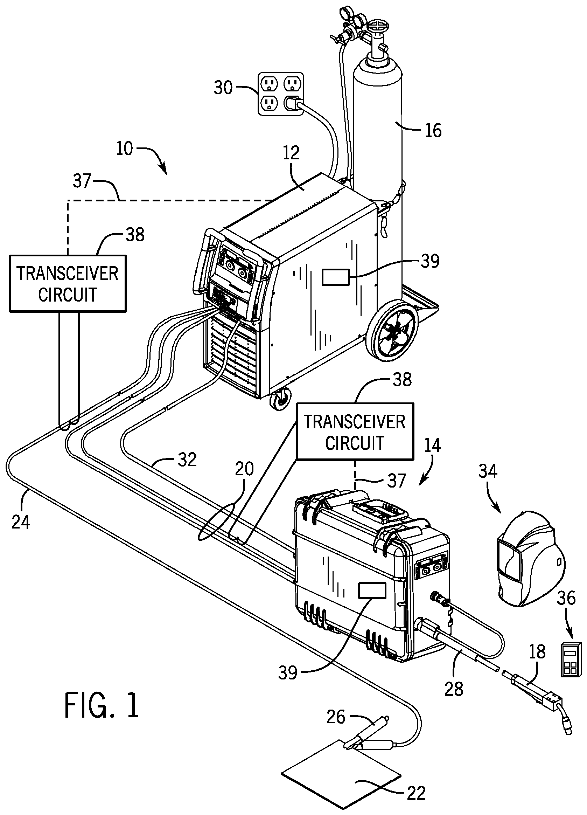

By way of introduction, FIG. 1 illustrates an example weld system 10 that uses transceiver circuits to communicate data between components of the weld system 10. It should be appreciated that, while the welding system 10 described herein is specifically presented as a gas metal arc welding (GMAW) system 10, the presently disclosed energy harvesting system may also be used with other arc welding processes (e.g., FCAW, FCAW-G, GTAW, SAW, SMAW, or similar arc welding processes) or other metal fabrication systems, such as plasma cutting systems, induction heating systems, and so forth. The welding system 10 includes a welding power supply unit 12 (i.e., a welding power source), a welding wire feeder 14, a gas supply system 16, and a welding torch 18. The welding power supply unit 12 generally supplies power for the welding system 10 and other various accessories, and may be coupled to the welding wire feeder 14 via a weld cable 20 as well as coupled to a workpiece 22 using a return path via a work cable 24 having a clamp 26. In the illustrated embodiment, the welding wire feeder 14 is coupled to the welding torch 18 via a weld cable 28 in order to supply welding wire and power to the welding torch 18 during operation of the welding system 10. In another embodiment, the welding power supply unit 12 may couple with and directly supply power to the welding torch 18.

In the embodiment illustrated in FIG. 1, the welding power supply unit 12 may generally include power conversion circuitry that receives input power from an alternating current power source 30 (e.g., the AC power grid, an engine/generator set, or a combination thereof), conditions the input power, and provides DC or AC output power via the weld cable 20. As such, the welding power supply unit 12 may power the welding wire feeder 14 that, in turn, powers the welding torch 18, in accordance with demands of the welding system 10. The work cable 24 terminating in the clamp 26 couples the welding power supply unit 12 to the workpiece 22 to close the circuit between the welding power supply unit 12, the workpiece 22, and the welding torch 18. The welding power supply unit 12 may include circuit elements (e.g., transformers, rectifiers, switches) capable of converting the AC input power to a direct current electrode positive (DCEP) output, direct current electrode negative (DCEN) output, DC variable polarity, or a variable balance (e.g., balanced or unbalanced) AC output, as dictated by the demands of the welding system 10 (e.g., based on the type of welding process performed by the welding system 10, and so forth).

The illustrated welding system 10 includes a gas supply system 16 that supplies a shielding gas or shielding gas mixtures to the welding torch 18. In the depicted embodiment, the gas supply system 16 is directly coupled to the welding torch 18 via a gas conduit 32 from the welding power supply unit 12. In another embodiment, the gas supply system 16 may instead be coupled to the welding wire feeder 14, and the welding wire feeder 14 may regulate the flow of gas from the gas supply system 16 to the welding torch 18. A shielding gas, as used herein, may refer to any gas or mixture of gases that may be provided to the arc and/or weld pool in order to provide a particular local atmosphere (e.g., shield the arc, improve arc stability, limit the formation of metal oxides, improve wetting of the metal surfaces, alter the chemistry of the weld deposit, and so forth).

In addition, in certain embodiments, other welding equipment and welding accessories (e.g., welding-related devices) may be used in the welding system 10. For example, in most welding applications, a welding helmet 34 may be worn by an operator of the welding system 10. The welding helmet 34 provides protection to the operator of the welding system 10, particularly protecting the eyes of the operator from the flashing associated with the welding arc during welding operations. In addition, in certain embodiments, the welding helmet 34 may provide feedback to the operator related to parameters of the welding operations. For example, the welding helmet 34 may include an internal display configured to display the welding parameters to the operator during the welding operations. In addition, in certain embodiments, a welding accessory 36 (also referred to as a welding subsystem) may be used to communicate between the welding wire feeder 14 and the welding torch 18. For example, the welding accessory 36 may be a pendant, a sensor, a battery, or the like. In certain embodiments, the welding accessory 36 may communicate with the system 10. Additionally, the welding accessory 36 is a device that may be used at a welding application remote from an associated welding power supply unit 12 and/or welding wire feeder 14, yet still communicates with the remote welding power supply unit 12 and/or welding wire feeder 14. In other words, the welding accessory 36 may receive data and relay the data back to the welding power supply unit 12 and/or the welding wire feeder 14 (e.g., via a wireless network connection).

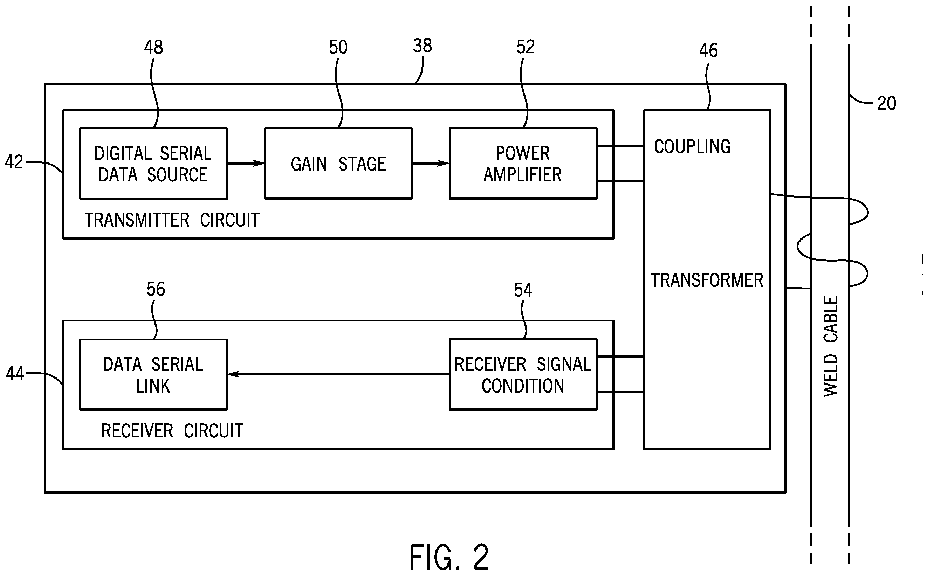

In certain embodiments, the components (e.g., welding power supply unit 12, welding wire feeder 14, welding accessory 36) of the welding system 10 may communicate with each other via the weld cable 20 using transceiver circuits 38. As will be discussed in detail below, the transceiver circuit 38 may transmit and receive current waveforms in a predetermined frequency range using coupling transformers attached to the weld cable 20 itself. For example, as shown in FIG. 1, a first transceiver circuit 38 may be coupled to the weld cable 20 within a close proximity to the power supply unit 12, while a second transceiver circuit 38 may be coupled to the weld cable 20 within a close proximity to the wire feeder 14. In this arrangement, the power supply unit 12 may be communicatively coupled to the first transceiver circuit 38 via a control cable 37. In the same manner, the wire feeder 14 may be communicatively coupled to the second transceiver circuit 38 via a different control cable 37. As such, data acquired by or received by the first transceiver circuit 38 may be transmitted via the control cable 37 and the weld cable 20 to the second transceiver circuit 38 using current waveforms, and vice versa. Additional details regarding the transmission of data using current waveforms will be discussed below with reference to FIG. 2.

In certain embodiments, some of the equipment or components of the welding system 10 may include circuitry 39 that may enable the equipment to provide data to the transceiver circuit 38. For instance, certain pieces of equipment, such as the power supply 12 or the wire feeder 14, may include the circuitry 39, which may include a communication component, a processor, a memory, a storage, input/output (I/O) ports, and the like. The communication component may be a wireless or wired communication component that may facilitate communication, prepare data to be sent across the weld cable 20, communicate between different pieces of equipment in the welding system 10, and the like.

The processor may be any type of computer processor or microprocessor capable of executing computer-executable code. In certain embodiments, the processor may also include multiple processors. The memory and the storage may be any suitable articles of manufacture that can serve as media to store processor-executable code, data, or the like. These articles of manufacture may represent computer-readable media (i.e., any suitable form of memory or storage) that may store the processor-executable code used by the processor. The memory and the storage may also be used to store data, analysis of data, and the like. The memory and the storage may represent non-transitory computer-readable media (i.e., any suitable form of memory or storage) that may store the processor-executable code used by the processor. It should be noted that non-transitory merely indicates that the media is tangible and not merely a signal. The I/O ports may be interfaces that may couple to different types of I/O modules.

Regarding FIG. 1, it should be noted that the welding equipment and accessories illustrated in FIG. 1 are merely exemplary. That is, it should be understood that the components presented in the welding system 10 of FIG. 1 are not intended to be limiting of the types of welding equipment and accessories that may be used in the welding system 10.

Turning now to FIG. 2, a block diagram of the transceiver 38 is illustrated. The transceiver circuit 38 includes a transmitter circuit 42 and a receiver circuit 44. The transmitter circuit 42 may receive data from a component within the welding system 10, convert the received data into a current waveform, and transmit the current waveform across the weld cable 20 via a coupling transformer 46. In certain embodiments, the current waveform may be an alternating current (AC) wave that represents and electrical current being generated by the transmitter circuit 42. The receiver circuit 44 of a separate transceiver circuit 38 may then receive the transmitted current waveform via the coupling transformer 46, translate the received current waveform into a particular data format, and send the corresponding data to another component in the welding system 10.

Referring back to the transmitter circuit 42, in certain embodiments, the transmitter circuit 42 may include a digital serial data source 48, a gain stage circuit 50, and a power amplifier 52. The digital serial data source 48 may include any component within the welding system 10 that is capable of outputting data. For example, the digital serial data source 48 may be the wire feeder 14, which may include an operator interface that allows an operator to indicate certain desired operations parameters (e.g., wire feed speed, arc voltage) related to the wire feeder 14. In this case, the wire feeder 14 may include the communication component mentioned above that receives the input from the operator interface of the wire feeder 14 and translates the input into a data format (e.g., serial data) that may then be provided to the transmitter circuit 42.

The data received via the digital serial data source 48 may then be passed to the gain stage circuit 50. The gain stage circuit 50 may be a current booster circuit or a circuit configured to translate the data received via the digital serial data source 48 into a current waveform. In certain embodiments, the current waveforms may be generated at a predetermined frequency, such that the receiver component 44 may be prepared to scan an appropriate frequency of the weld cable 20 when receiving transmitted current waveforms.

In one embodiment, the gain stage circuit 50 may use a digital modulation scheme to translate the received data into current waveforms. For example, the gain stage circuit 50 may use phase-shift keying (PSK) to change or modulate a phase of a reference signal that represents the received data.

After generating the current waveforms, the gain stage circuit 50 may pass the current waveforms to the power amplifier 52. The power amplifier 52 may be any type of amplifier designed to increase the power or the amplitude of the received current waveforms. The power amplifier 52 may thus be used to ensure that the current waveform is large enough to be transmitted via the weld cable 20. In certain embodiments, the power amplifier 52 may use a high efficiency circuit topology, such as a Class "D," Class "E," or Class "F" amplifiers. By using a high efficiency circuit topology, the power amplifier 52 may accommodate a wide ratio metric bandwidth. For example, the power amplifier 52 may operate between 10 kHz and 2 MHz and may have a bandwidth of over 7.6 octaves.

In some instances, the power amplifier 52 may also include adaptive circuitry that may include linearization circuitry to enhance the linearity and efficiency of the current waveforms provided to the power amplifier 52. In addition, the adaptive circuitry may also receive desired changes for the operations of the power amplifier 52. The desired changes may include altering an effective bandwidth and/or transfer characteristics of the current waveform based on a selected operating frequency. In one embodiment, the changes may be sent from a processor of a different component in the welding system 10 that may be coupled to the transceiver circuit 38. Alternatively, the transceiver circuit 38 may receive these changes from a digital sub-channel via the digital serial data source 48. The digital sub-channel may be part of a serial data stream provided by the digital serial data source 48. In one example, the digital sub-channel may be a single modulated tone in an Orthogonal Frequency-Division Multiplexing (OFDM) communications system or a Code Division Multiple Access (CDMA) communications system, which may be shared with other subsystems on a different network.

After amplifying the current waveforms, the power amplifier 52 may provide the current waveforms to the coupling transformer 46. The coupling transformer 46 may be used to transfer electrical energy, such as the amplified current waveform, from one circuit device (e.g., coupling transformer 46) to another (e.g., weld cable 20). In one embodiment, the coupling transformer 46 may include a winding wrapped around or adjacent to the weld cable 20, thereby using the weld cable 20 as a single turn in an air core transformer, such that the transformer does not saturate. The coupling transformer 46 may have a unity ratio (1:1) and thus transfer power from the transmitter circuit 42 to the weld cable 20 without changing the power (except for losses). In addition to the winding wrapped around the weld cable 20 (e.g., primary winding), the coupling transformer 46 may include two secondary windings that may be coupled to the power amplifier 52 of the transmitter circuit 42 and the receiver circuit 44. As such, whether the transceiver circuit 38 acts as a transmitter or a receiver, the transmitter circuit 42 or the receiver circuit 44 may transmit or receive the current waveforms using the coupling transformer 46 and the weld cable 20.

Referring now to the receiver circuit 44 of the transceiver circuit 38, as shown in FIG. 2, the receiver circuit 44 includes a receiver signal conditioner 54 and a data serial link 56. The receiver signal conditioner 54 may receive the transmitted current waveform via a secondary winding of the coupling transformer 46. As such, the receiver signal conditioner 54 may translate the current waveforms to a particular data format (e.g., serial data). In certain embodiments, the receiver signal conditioner 54 may also apply certain filters to the received current waveforms to remove noise that may be present on the current waveforms due to being transmitted via the weld cable 20. The receiver signal conditioner 54 may also include an analog-to-digital converter that may convert the current waveforms into digital values.

In certain embodiments, the receiver signal conditioner 54 may also manage the received current waveforms in such a manner that that the peak amplitudes for the received current waveforms (i.e., data plus any noise) do not include additional data from the analog-to-digital converter or any other circuit component. Since the receiver signal conditioner 54 may be designed to receive current waveforms that are present on a predetermined frequency or a range of frequencies that is being used by the transceiver circuit 38, the receiver signal conditioner may account for frequency and amplitude transfer functions of the weld cable 20, the frequencies in use by the transceiver circuit 38, noise in the weld cable 20 (e.g., a function of the welding power supply 12 and of the welding environment), and the like.

After conditioning the received current waveforms, the receiver signal conditioner 54 may send the resulting data to the data serial link 56. The data serial link 56 may be coupled to a piece of equipment in the welding system 10, such that the data may be transferred to an appropriate device. As such, the device receiving the data from the data serial link 56 is capable of communicating with a device that transmitted the data via the transmitter circuit 44.

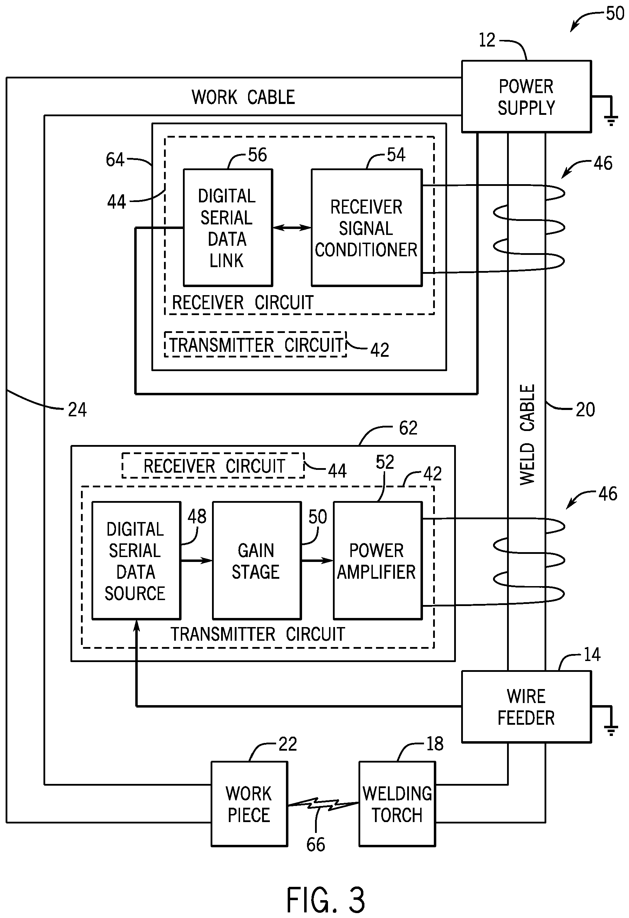

Keeping the foregoing in mind, FIG. 3 illustrates and example block diagram of two transceiver circuits 62 and 64 that may communicate data between the wire feeder 14 and the power supply 12. Referring to FIG. 3, the wire feeder 14 may provide data related to the operation of the wire feeder 14, the torch 18, or another component of the welding system 10 to the digital serial data source 48 of the transmitter circuit 42 in a first transceiver circuit 62. In certain embodiments, the data provided by the wire feeder 14 may include a desired arc voltage, trigger information, and the like.

The transmitter circuit 42 may then provide a current waveform that corresponds to the data received from the wire feeder 14 onto the coupling transformer 46 of the first transceiver circuit 62. The coupling transformer 46 of the first transceiver circuit 62 may then transfer the current waveform onto the welding cable 20, which is coupled to the primary winding of the coupling transformer 46 of the first transceiver circuit 62.

The current waveform may then be transmitted via the weld cable 20, arc 66, workpiece 22, and the work cable 24 to the coupling transformer 46 of the second transceiver circuit 64. The secondary winding of the coupling transformer 46 in the second transceiver 64 may be coupled to the receiver circuit 44. As such, the receiver circuit 44 may condition the received current waveforms using the receiver signal conditioner 54 and send the resulting data to the power supply 12 via the digital serial data link 56.

Although FIG. 3 illustrates a particular arrangement of two transceiver circuits 62 and 64, it should be noted that the transceiver circuits 62 and 64 are not limited to being placed as shown in FIG. 3. Instead, it should be understood that the transceiver circuits 62 and 64 (and any additional transceiver circuits) may be disposed at any point along the weld cable 20, the work cable 24, or both to facilitate communications between various pieces of equipment or components in the welding system 10.

With the foregoing in mind, FIG. 3 illustrates the current mode connection that may satisfy a closed current loop in two ways. At higher operating frequencies, as opposed to direct current (DC), a circuit connection may be made using a parasitic capacitance between the various circuit elements. For example, a small electrical capacitance exists between the torch end of the welding (electrode) cable and a ground connection. This capacitance is the result of the physical dimensions of the electrode cabling, a distance to another conductor and a dielectric material (e.g., the insulating jacket of the weld cable). At higher frequencies, the impedance of this small electrical capacitance is low enough to allow the micro-amp currents to conduct along the weld cable 20 to facilitate communication between two transceiver circuits 38 disposed on the weld cable 20. As such, a current mode connection at an end of a wire, such as the weld torch handle, has a high impedance connection to ground consisting of the parasitic capacitance created by the geometry of the weld cable 20 with relationship to ground. This parasitic capacitance completes the current path for the high frequency signals.

When the coupling transformer 46 (current mode coupler) is placed between devices with connections to ground, such as when between the wire feeder 14 and the welding power supply 12, both connected with the electrode weld cable and a ground connection, the higher impedance parasitic capacitances discussed above are less important in creating the closed loop for the current mode coupler to operate effectively.

In a second method, currents may be injected onto the weld cable conductor without regard to a return path if the weld cable length between the coupled located at an open circuit location (e.g., as for a torch) begins to become an appreciable percentage of the wavelength of the data communications signal (defined as the speed of light, c, divided by the frequency). That is, if an operating frequency can be chosen such that the length of open-circuited cable is greater than 1% to 5% of the operating wavelength of the signal, then a current source can create a "standing wave," such that the single conductor is part of an oscillatory circuit and is itself the forward and return path. For example, a 20 foot long weld cable, connected between the wire feeder 14 and the welding torch 18, with a torch mounted current mode device, could inject a significant radio frequency signal at an operating frequency of approximately 520 KHz. As the operating frequency increases, the apparent circuit losses for the transmission of the data decrease (excepting other effects).

In this case, the operating frequency may be adjusted to the operating region of 2 to 30 MHz to allow communications between a torch handle and a connected wire feeder 14 or power supply 12 using either the weld cable 20 connected to the electrode supply or the weld cable 20 connected to the work piece 22 so as to negate a condition in which the parasitic capacitances are too low for effective communication.

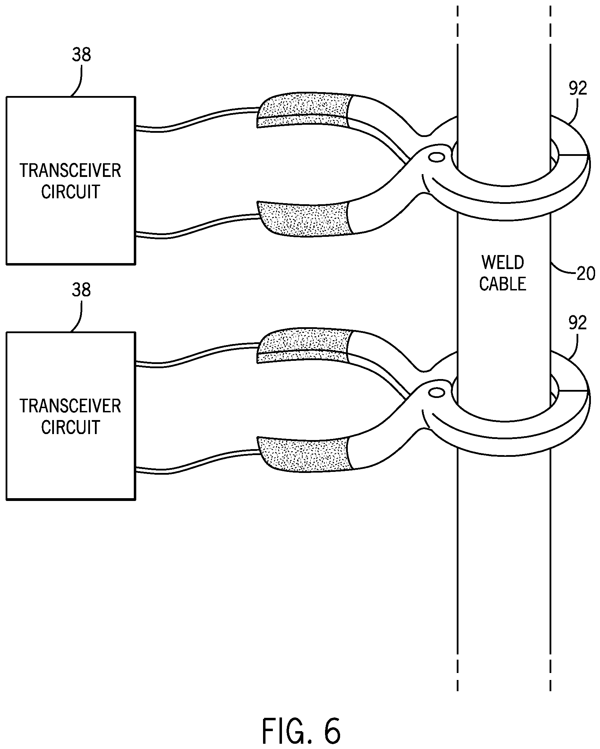

In certain embodiments, the coupling transformer 46 may be coupled to the weld cable 20 via a mechanical clamp that clasps the periphery of the weld cable 20. As such, the mechanical clamp may include the secondary winding(s) of the coupling transformer 46 and may thus transmit and receive the current waveforms between the transceiver circuit 38 and the weld cable 20. Additional details regarding the mechanical clamp will be described below with reference to FIG. 6.

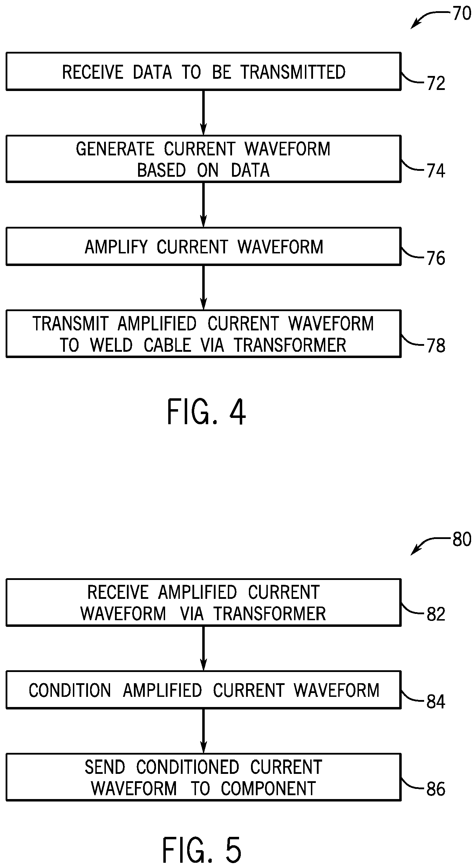

With the foregoing in mind, FIG. 4 illustrates a method 70 for transmitting data using the transceiver circuit 38. For the purposes of discussion, the method 70 will be describes with reference to the first transceiver circuit 62 of FIG. 3. Referring back to FIG. 4, at block 72, the first transceiver circuit 62 may receive data to be transmitted from a component in the welding system 10. The data to be transmitted may include desired operating conditions, messages, current operating conditions, voltages, temperatures, and the like.

At block 74, the first transceiver circuit 62 may generate a current waveform based on the data. As mentioned above, the current waveform may be generated in the gain stage circuit 50. The current waveform may be generated using certain modulation techniques at a predetermined frequency or within a predetermined frequency range.

At block 76, the first transceiver circuit 62 may amplify the current waveform using the power amplifier 52. At block 78, the first transceiver circuit 62 may transmit the amplified current waveform to the weld cable 20 via the coupling transformer 46.

After the current waveform is transmitted along the weld cable 20, the second transceiver circuit 64 may employ a method 80 of FIG. 5 for receiving the transmitted current waveform. Referring now to FIG. 5, at block 82, the second transceiver circuit 64 may receive the amplified current waveform via the coupling transformer 46 of the second transceiver circuit 64.

At block 84, the second transceiver circuit 64 may condition the received current waveform as discussed above with reference to the receiver signal conditioner 54. In one embodiment, the received current waveform may be translated into a data stream such as serial data. After the current waveform is conditioned, at block 86, the second transceiver circuit 64 may send the resulting data to a device, such as a component in the welding system 10.

Keeping the foregoing in mind, the communication of data between two or more transceiver circuits 38 relies on the coupling transformer 46 being attached or coupled to the weld cable 20. In certain embodiments, a secondary winding of the coupling transformer 46 may be a fixture attached around the weld cable 20. However, in other embodiments, the secondary winding of the coupling transformer may be constructed as a mechanical clamp. For instance, FIG. 6 illustrates an example mechanical clamp 92 that may include a secondary winding of the coupling transformer 46 of the transceiver circuit 38. The mechanical clamp 92 may be constructed to attach around a surface of the weld cable 20. As such, the mechanical clamp 92 may have an inner diameter that sufficiently matches the diameter of the outer diameter weld cable 20. The weld cable 20 may be associated with certain expected gauge cables and thus a different diameter mechanical clamp 92 may be constructed for each expected gauge cable. In one embodiment, the mechanical clamp may have an adjustable diameter to fit the around various sized weld cables 20.

## Claims

1. A system for communicating between at least two welding components (12, 14, 18, 36), comprising:
- a welding cable (20),
- a transmitter circuit (42) configured to send a first set of data via the welding cable (20) configured to couple the at least two welding components (12, 14, 18, 36);
- a receiver circuit (44) configured to receive a second set of data via the welding cable (20); and
- a coupling transformer (46) configured to couple to the welding cable (20), the transmitter circuit (42), and the receiver circuit (44), wherein the first set of data is sent and the second set of data is received via the coupling transformer (46),
**characterized in that**
the coupling transformer (46) comprises a mechanical plier-like clamp (92) having an inner diameter that matches the outer diameter of the welding cable (20) and having handles to be gripped for attaching the mechanical clamp (92) around the surface of the welding cable (20), the mechanical clamp (92) having an adjustable diameter configured to fit around variously sized welding cables (20) and, wherein the mechanical clamp (92) includes the secondary windings of the coupling transformer (46).

2. The system of claim 1,
wherein the transmitter circuit (42) is configured to:
- receive the first set of data from a first welding component (12, 14, 36) of the at least two welding component (12, 14, 18, 36);
- generate a current waveform based on the first set of data; and
- transmit the current waveform to the welding cable (20) via the coupling transformer (46).

3. The system of claim 2,
wherein the transmitter circuit (42) comprises a gain stage (50) circuit configured to generate the current waveform.

4. The system of claim 2,
wherein the transmitter circuit (42) comprises a power amplifier (52) configured to amplify the current waveform,
wherein the power amplifier (52) comprises a Class D amplifier (52), Class E amplifier (52), or a Class F amplifier (52).

5. The system of claim 4,
wherein the power amplifier (52) is configured to operate between 10 kHz and 2 MHz.

6. The system of claim 4,
wherein the power amplifier (52) is configured to operate between 2 MHz and 30 MHz

7. The system of one of claims 4 to 6,
wherein the power amplifier (52) comprises adaptive circuitry configured to enhance linearity and efficiency of the current waveform.

8. The system of one of claims 4 to 7,
wherein the power amplifier (52) comprises adaptive circuitry configured to:
- receive data associated with one or more changes associated with an operation of the power amplifier (52); and
- implement the changes to the operation,
wherein the changes comprise altering an effective bandwidth and/or transfer characteristics of the current waveform based on a selected operating frequency.

9. The system of claim 8,
wherein the adaptive circuitry is configured to receive the changes via a digital sub-channel from the first welding component (12, 14, 18 36), wherein the digital sub-channel is part of a serial data stream between the first welding component (12, 14, 18, 36) and the transmitter circuit (42), wherein the digital sub-channel comprises a single modulated tone in an Orthogonal Frequency-Division Multiplexing (OFDM) communications system or a Code Division Multiple Access (CDMA) communications system.

10. The system of claim of one of the preceding claims,
wherein the receiver circuit (44) is configured to:
- receive the second set of data via the welding cable (20) and the coupling transformer (46);
- condition the second set of data; and
- transmit the conditioned second set of data to a first welding component (12, 14, 18, 36) of the at least two welding components (12, 14, 36).

11. A welding system, comprising:
- a power supply (12);
- a welding cable (20) configured to provide power from the power supply (12) to a welding component (14, 18, 36);
- a system for communicating between at least two welding components (12, 14, 18, 36) as defined in one of the preceding claims, wherein a first of said at least two welding components is the power supply (12), comprising
- a first transceiver (38) configured to couple to the welding cable (20), wherein the first transceiver (38) comprises:
- a first transmitter circuit (42) configured to send a first set of data via the welding cable (20);
- a first receiver circuit (44) configured to receive a second set of data via the welding cable (20); and
- a first coupling transformer (46) configured to couple to the welding cable (20), the first transmitter circuit (42), and the first receiver circuit (44); and
- a second transceiver (38) configured to couple to the welding cable (20), wherein the second transceiver (38) comprises:
- a second transmitter circuit (42) configured to send the second set of data via the welding cable (20);
- a second receiver circuit (44) configured to receive the first set of data via the welding cable (20); and
- a second coupling transformer (46) configured to couple to the welding cable (20), the second transmitter circuit (42), and the second receiver circuit (44).

12. The welding system of claim 11,
wherein a second of the at least two welding components (12, 14, 18 36) comprises a wire feeder (14), a welding torch (18), or any combination thereof.

13. A method, comprising:
- receiving, at a transmitter circuit (42), data from a welding component (12, 14, 36) configured to perform a welding operation;
- generating, using the transmitter circuit (42), a current waveform based on the data; amplifying, using an amplifier (52) of the transmitter circuit (42), the current waveform; and
- transmitting, using a coupling transformer (46) of the transmitter circuit (42), the amplified current waveform to a weld cable configured to couple power to the welding component (12, 14, 18, 36)
**characterized in that**
the coupling transformer (46) comprises a mechanical plier-like clamp (92) having an inner diameter that matches the outer diameter of the welding cable (20) and having handles to be gripped for attaching the mechanical clamp (92) around the surface of the welding cable (20), the mechanical clamp (92) having an adjustable diameter configured to fit around variously sized welding cables (20),
wherein the mechanical clamp (92) includes the secondary windings of the coupling transformer (46).

14. The method of claim 13,
wherein generating the current waveform comprises translating the data into the current waveform using a digital modulation scheme.

## Patentansprüche

1. System für die Kommunikation zwischen mindestens zwei Schweißkomponenten (12, 14, 18, 36), das Folgendes umfasst:
- ein Schweißkabel (20);
- eine Senderschaltung (42), die konfiguriert ist, einen ersten Datensatz über das Schweißkabel (20) zu senden, das konfiguriert ist, die mindestens zwei Schweißkomponenten (12, 14, 18, 36) zu koppeln;
- eine Empfängerschaltung (44), die konfiguriert ist, einen zweiten Datensatz über das Schweißkabel (20) zu empfangen, und
- einen Kopplungstransformator (46), der konfiguriert ist, das Schweißkabel (20), die Senderschaltung (42) und die Empfängerschaltung (44) zu koppeln, wobei der erste Datensatz über den Kopplungstransformator (46) gesendet wird und der zweite Datensatz über ihn empfangen wird,
**dadurch gekennzeichnet, dass** der Kopplungstransformator (46) eine mechanische zangenähnliche Klemme (92) umfasst, die einen Innendurchmesser aufweist, der mit dem Außendurchmesser des Schweißkabels (20) übereinstimmt, und Griffe aufweist, die zum Anbringen der mechanischen Klammer (92) um die Oberfläche des Schweißkabels (20) gefasst werden, wobei die mechanische Klemme (92) einen einstellbaren Durchmesser aufweist, der konfiguriert ist, um unterschiedlich große Schweißkabel (20) zu passen, und wobei die mechanische Klemme (92) die Sekundärwicklungen des Kopplungstransformators (46) enthält.

2. System nach Anspruch 1,
wobei die Senderschaltung (42) konfiguriert ist:
den ersten Datensatz von einer ersten Schweißkomponente (12, 14, 36) der mindestens zwei Schweißkomponenten (12, 14, 18, 36) zu empfangen;
- eine Stromsignalform auf der Grundlage des ersten Datensatzes zu erzeugen und
- die Stromsignalform über den Kopplungstransformator (46) an das Schweißkabel (20) zu senden.

3. System nach Anspruch 2,
wobei die Senderschaltung (42) eine Verstärkerstufenschaltung (50) umfasst, die konfiguriert ist, die Stromsignalform zu erzeugen.

4. System nach Anspruch 2,
wobei die Senderschaltung (42) einen Leistungsverstärker (52) umfasst, der konfiguriert ist, die Stromsignalform zu verstärken, wobei der Leistungsverstärker (52) einen Klasse-D-Verstärker (52), einen Klasse-E-Verstärker (52) oder einen Klasse-F-Verstärker (52) umfasst.

5. System nach Anspruch 4,
wobei der Leistungsverstärker (52) konfiguriert ist, im Bereich von 10 kHz bis 2 MHz zu arbeiten.

6. System nach Anspruch 4,
wobei der Leistungsverstärker (52) konfiguriert ist, im Bereich von 2 MHz bis 30 MHz zu arbeiten.

7. System nach einem der Ansprüche 4 bis 6,
wobei der Leistungsverstärker (52) eine adaptive Schaltungsanordnung umfasst, die konfiguriert ist, Linearität und Leistungsfähigkeit der Stromsignalform zu verbessern.

8. System nach einem der Ansprüche 4 bis 7,
wobei der Leistungsverstärker (52) eine adaptive Schaltungsanordnung umfasst, die konfiguriert ist:
- Daten zu empfangen, die einer oder mehreren Änderungen zugeordnet sind, die dem Betrieb des Leistungsverstärkers (52) zugeordnet sind, und
- die Änderungen in dem Betrieb vorzunehmen,
wobei die Änderungen das Verändern einer effektiven Bandbreite und/oder von Übertragungscharakteristiken der Stromsignalform auf der Grundlage einer gewählten Betriebsfrequenz umfassen.

9. System nach Anspruch 8,
wobei die adaptive Schaltungsanordnung konfiguriert ist, die Änderungen über einen digitalen Unterkanal von der ersten Schweißkomponente (12, 14, 18, 36) zu empfangen, wobei der digitale Unterkanal Teil eines seriellen Datenstroms zwischen der ersten Schweißkomponente (12, 14, 18, 36) und der Senderschaltung (42) ist, wobei der digitale Unterkanal einen einzelnen modulierten Ton in einem Kommunikationssystem mit einem orthogonalen Frequenzmultiplexverfahren (OFDM) oder einem Kommunikationssystem mit Codemultiplexzugriff (CDMA) umfasst.

10. System nach einem der vorhergehenden Ansprüche, wobei die Empfängerschaltung (44) konfiguriert ist:
- den zweiten Datensatz über das Schweißkabel (20) und den Kopplungstransformator (46) zu empfangen;
- den zweiten Datensatz aufzubereiten und
- den aufbereiteten zweiten Datensatz an eine erste Schweißkomponente (12, 14, 18, 36) der mindestens zwei Schweißkomponenten (12, 14, 36) zu senden.

11. Schweißsystem, das Folgendes umfasst:
- eine Leistungsversorgung (12);
- ein Schweißkabel (20), das konfiguriert ist, für eine Schweißkomponente (14, 18, 36) Leistung von der Leistungsversorgung (12) bereitzustellen;
- ein System für die Kommunikation zwischen mindestens zwei Schweißkomponenten (12, 14, 18, 36), wie es in einem der vorhergehenden Ansprüche definiert ist, wobei eine erste der mindestens zwei Schweißkomponenten die Leistungsversorgung (12) ist, das Folgendes umfasst:
- einen ersten Sender/Empfänger (38), der konfiguriert ist, mit dem Schweißkabel (20) gekoppelt zu sein, wobei der erste Sender/Empfänger (38) Folgendes umfasst:
- eine erste Senderschaltung (42), die konfiguriert ist, einen ersten Datensatz über das Schweißkabel (20) zu senden;
- eine erste Empfängerschaltung (44), die konfiguriert ist, einen zweiten Datensatz über das Schweißkabel (20) zu empfangen, und
- einen ersten Kopplungstransformator (46), der konfiguriert ist, an das Schweißkabel (20), die erste Senderschaltung (42) und die erste Empfängerschaltung (44) gekoppelt zu sein, und
- einen zweiten Sender/Empfänger (38), der konfiguriert ist, mit dem Schweißkabel (20) gekoppelt zu sein, wobei der zweite Sender/Empfänger (38) Folgendes umfasst:
- eine zweite Senderschaltung (42), die konfiguriert ist, einen zweiten Datensatz über das Schweißkabel (20) zu senden;
- eine zweite Empfängerschaltung (44), die konfiguriert ist, den ersten Datensatz über das Schweißkabel (20) zu empfangen, und
- einen zweiten Kopplungstransformator (46), der konfiguriert ist, an das Schweißkabel (20), die zweite Senderschaltung (42) und die zweite Empfängerschaltung (44) gekoppelt zu sein.

12. Schweißsystem nach Anspruch 11,
wobei eine zweite der mindestens zwei Schweißkomponenten (12, 14, 18, 36) eine Drahtzuführvorrichtung (14), einen Schweißbrenner (18) oder eine Kombination davon umfasst.

13. Verfahren, das Folgendes umfasst:
- Empfangen von Daten von einer Schweißkomponente (12, 14, 36), die konfiguriert ist, einen Schweißbetrieb durchzuführen, an einer Senderschaltung (42);
- Erzeugen einer Stromsignalform auf der Grundlage der Daten unter Verwendung der Senderschaltung (42); Verstärken der Stromsignalform unter Verwendung eines Verstärkers (52) der Senderschaltung (42); und
- Senden der verstärkten Stromsignalform an ein Schweißkabel, das konfiguriert ist, Leistung an die Schweißkomponente (12, 14, 18, 36) zu koppeln, unter Verwendung eines Kopplungstransformators (46) der Senderschaltung (42),
**dadurch gekennzeichnet, dass**
der Kopplungstransformator (46) eine mechanische zangenähnliche Klemme (92) umfasst, die einen Innendurchmesser aufweist, der mit dem Außendurchmesser des Schweißkabels (20) übereinstimmt, und Griffe aufweist, die zum Anbringen der mechanischen Klammer (92) um die Oberfläche des Schweißkabels (20) gefasst werden, wobei die mechanische Klemme (92) einen einstellbaren Durchmesser aufweist, der konfiguriert ist, um unterschiedlich große Schweißkabel (20) zu passen,
wobei die mechanische Klemme (92) die Sekundärwicklungen des Kopplungstransformators (46) enthält.

14. Verfahren nach Anspruch 13,
wobei das Erzeugen der Stromsignalform das Übersetzen der Daten in die Stromsignalform unter Verwendung eines digitalen Modulationsschemas umfasst.

## Revendications

1. Système pour communiquer entre au moins deux composants de soudage (12, 14, 18, 36), comprenant :
- un câble de soudage (20),
- un circuit transmetteur (42) configuré pour envoyer un premier jeu de données par l'intermédiaire du câble de soudage (20) configuré pour coupler les au moins deux composants de soudage (12, 14, 18, 36) ;
- un circuit récepteur (44) configuré pour recevoir un second jeu de données par l'intermédiaire du câble de soudage (20) ; et
- un transformateur de couplage (46) configuré pour se coupler au câble de soudage (20), au circuit transmetteur (42), et au circuit récepteur (44), dans lequel le premier jeu de données est envoyé et le second jeu de données est reçu par l'intermédiaire du transformateur de couplage (46),
**caractérisé en ce que**
- le transformateur de couplage (46) comprend un dispositif de serrage mécanique en forme de pinces (92) ayant un diamètre intérieur qui correspond au diamètre extérieur du câble de soudage (20) et ayant des poignées destinées à être saisies pour attacher le dispositif de serrage mécanique (92) autour de la surface du câble de soudage (20), le dispositif de serrage mécanique (92) ayant un diamètre ajustable configuré pour aller autour de câbles de soudage de tailles variées (20), et dans lequel le dispositif de serrage mécanique (92) inclut les enroulements secondaires du transformateur de couplage (46).

2. Système selon la revendication 1,
dans lequel le circuit transmetteur (42) est configuré pour :
- recevoir le premier jeu de données à partir d'un premier composant de soudage (12, 14, 36) des au moins deux composants de soudage (12, 14, 18, 36) ;
- générer une forme d'onde de courant sur la base du premier jeu de données ; et
- transmettre la forme d'onde de courant au câble de soudage (20) par l'intermédiaire du transformateur de couplage (46).

3. Système selon la revendication 2,
dans lequel le circuit transmetteur (42) comprend un circuit d'étage de gain (50) configuré pour générer la forme d'onde de courant.

4. Système selon la revendication 2,
dans lequel le circuit transmetteur (42) comprend un amplificateur de puissance (52) configuré pour amplifier la forme d'onde de courant,
dans lequel l'amplificateur de puissance (52) comprend un amplificateur de classe D (52), un amplificateur de classe E (52), ou un amplificateur de classe F (52).

5. Système selon la revendication 4,
dans lequel l'amplificateur de puissance (52) est configuré pour fonctionner entre 10 kHz et 2 MHz.

6. Système selon la revendication 4,
dans lequel l'amplificateur de puissance (52) est configuré pour fonctionner entre 2 MHz et 30 MHz

7. Système selon l'une des revendications 4 à 6,
dans lequel l'amplificateur de puissance (52) comprend une circuiterie adaptative configurée pour améliorer la linéarité et le rendement de la forme d'onde de courant.

8. Système selon l'une des revendications 4 à 7,
dans lequel l'amplificateur de puissance (52) comprend une circuiterie adaptative configurée pour :
- recevoir des données associées à un ou plusieurs changements associés à un fonctionnement de l'amplificateur de puissance (52) ; et
- mettre en œuvre les changements du fonctionnement,
dans lequel les changements comprennent la modification d'une largeur de bande effective et/ou de caractéristiques de transfert de la forme d'onde de courant sur la base d'une fréquence de fonctionnement sélectionnée.

9. Système selon la revendication 8,
dans lequel la circuiterie adaptative est configurée pour recevoir les changements, par l'intermédiaire d'un sous-canal numérique, à partir du premier composant de soudage (12, 14, 18 36), dans lequel le sous-canal numérique fait partie d'un flux de données en série entre le premier composant de soudage (12, 14, 18, 36) et le circuit transmetteur (42), dans lequel le sous-canal numérique comprend une seul tonalité modulée dans un système de communication à multiplexage par répartition orthogonale de la fréquence (OFDM) ou un système de communication à accès multiple par répartition en code (CDMA).

10. Système selon la revendication selon l'une des revendications précédentes, dans lequel le circuit récepteur (44) est configuré pour :
- recevoir le second jeu de données par l'intermédiaire du câble de soudage (20) et du transformateur de couplage (46) ;
- conditionner le second jeu de données ; et
- transmettre le second jeu de données conditionné à un premier composant de soudage (12, 14, 18, 36) des au moins deux composants de soudage (12, 14, 36).

11. Système de soudage, comprenant :
- une alimentation en énergie électrique (12) ;
- un câble de soudage (20) configuré pour fournir de l'énergie électrique, depuis l'alimentation en énergie électrique (12), à un composant de soudage (14, 18, 36) ;
- un système pour communiquer entre au moins deux composants de soudage (12, 14, 18, 36) selon l'une des revendications précédentes, dans lequel un premier desdits au moins deux composants de soudage est l'alimentation en énergie électrique (12), comprenant
- un premier transmetteur-récepteur (38) configuré pour se coupler au câble de soudage (20), dans lequel le premier transmetteur-récepteur (38) comprend :
- un premier circuit transmetteur (42) configuré pour envoyer un premier jeu de données par l'intermédiaire du câble de soudage (20) ;
- un premier circuit récepteur (44) configuré pour recevoir un second jeu de données par l'intermédiaire du câble de soudage (20) ; et
- un premier transformateur de couplage (46) configuré pour se coupler au câble de soudage (20), au premier circuit transmetteur (42), et au premier circuit récepteur (44) ; et
- un second transmetteur-récepteur (38) configuré pour se coupler au câble de soudage (20), dans lequel le second transmetteur-récepteur (38) comprend :
- un second circuit transmetteur (42) configuré pour envoyer le second jeu de données par l'intermédiaire du câble de soudage (20) ;
- un second circuit récepteur (44) configuré pour recevoir le premier jeu de données par l'intermédiaire du câble de soudage (20) ; et
- un second transformateur de couplage (46) configuré pour se coupler au câble de soudage (20), au second circuit transmetteur (42), et au second circuit récepteur (44).

12. Système de soudage selon la revendication 11,
dans lequel un second des au moins deux composants de soudage (12, 14, 18 36) comprend un dispositif d'alimentation en fil (14), un chalumeau de soudage (18), ou une quelconque association de ceux-ci.

13. Procédé, comprenant :
- la réception, à un circuit transmetteur (42), de données provenant d'un composant de soudage (12, 14, 36) configuré pour réaliser une opération de soudage ;
- la génération, en utilisant le circuit transmetteur (42), d'une forme d'onde de courant sur la base des données ;
- l'amplification, en utilisant un amplificateur (52) du circuit transmetteur (42), de la forme d'onde de courant ; et
- la transmission, en utilisant un transformateur de couplage (46) du circuit transmetteur (42), de la forme d'onde de courant amplifiée à un câble de soudage configuré pour coupler l'énergie électrique au composant de soudage (12, 14, 18, 36), **caractérisé en ce que**
le transformateur de couplage (46) comprend un dispositif de serrage mécanique en forme de pinces (92) ayant un diamètre intérieur qui correspond au diamètre extérieur du câble de soudage (20) et ayant des poignées destinées à être saisies pour attacher le dispositif de serrage mécanique (92) autour de la surface du câble de soudage (20), le dispositif de serrage mécanique (92) ayant un diamètre ajustable configuré pour aller autour de câbles de soudage de tailles variées (20),
dans lequel le dispositif de serrage mécanique (92) inclut les enroulements secondaires du transformateur de couplage (46).

14. Procédé selon la revendication 13,
dans lequel la génération de la forme d'onde de courant comprend la conversion des données en la forme d'onde de courant en utilisant un mode de modulation numérique.
